# EUROPÄISCHE PATENTSCHRIFT

(11) **EP 2 543 053 B1**
(45) Veröffentlichungstag und Bekanntmachung des Hinweises auf die Patenterteilung: **16.12.2015**
(21) Anmeldenummer: 11707642.2
(22) Anmeldetag: 02.03.2011
(51) Int. Cl.: H01H 19/02, G05G 1/10, H01H 19/14

(54) **BLENDE FÜR EIN HAUSHALTSGERÄT MIT DREHSCHALTER, SOWIE HAUSHALTSGERÄT**
PANEL FOR A DOMESTIC APPLIANCE HAVING A ROTARY SWITCH, AND DOMESTIC APPLIANCE
PANNEAU POUR APPAREIL MÉNAGER MUNI D'UN COMMUTATEUR ROTATIF, ET APPAREIL MÉNAGER

(30) Priorität: 02.03.2010 DE 102010009993
(43) Veröffentlichungstag der Anmeldung: 09.01.2013
(73) Patentinhaber: PAS Deutschland GmbH, 16816 Neuruppin (DE)
(72) Erfinder: KLIMECKI, Marek, PL-60-688 Poznan (PL)
(74) Vertreter: Witte, Weller & Partner Patentanwälte mbB
(86) Internationale Anmeldenummer: PCT/EP2011/053123
(87) Internationale Veröffentlichungsnummer: WO 2011/107516

(56) Entgegenhaltungen:
- DE-A1- 10 234 925
- DE-U1- 20 314 364
- US-A- 5 204 502

## Beschreibung

Die vorliegende Erfindung betrifft eine Blende für ein Haushaltsgerät mit einem Drehschalter.

Die Erfindung betrifft auch ein Haushaltsgerät mit einem Drehschalter und/oder mit einer Blende.

Haushaltsgeräte, darunter insbesondere Waschmaschinen und Trockner, werden in der Regel über Bedienelemente bedient, die an der Vorderseite des Haushaltsgeräts angeordnet sind. Die Bedienelemente sind dabei üblicherweise in einer Blende integriert.

Zu den typischen Bedienelementen zählen so genannte Drehschalter. Ein Benutzer kann dabei den Drehschalter in verschiedene Drehpositionen drehen und auf diese Weise bestimmte Einstellungen am Haushaltsgerät vornehmen. So können beispielsweise eine bestimmte Waschtemperatur, ein bestimmtes Programm oder ein gewünschter Trocknungsgrad mittels des Drehschalters vorgegeben werden.

Drehschalter gemäß dem Stand der Technik, wie beispielsweise in DE 22 45 444 gezeigt, sind verhältnismäßig komplex aufgebaut und sind nur mit erheblichem Aufwand an spezifische Anforderungen anzupassen. Zudem sind die erforderlichen Bauteile relativ teuer und haben insgesamt eine relativ große Bauhöhe bzw. Bautiefe.

Bei Drehschaltern ist es üblich, dass bestimmte Rastpositionen vorgegeben werden. Dies bewirkt einerseits, dass der Benutzer beim Drehen des Drehschalters eine haptische Rückmeldung bezüglich der Rastpositionen erfährt. Andererseits kann es gewünscht sein, dass der Drehschalter nur an den vorgegebenen Rastpositionen zur Ruhe kommt, das heißt, wird der Drehschalter in einer Position losgelassen, die keiner der vorgegebenen Rastpositionen entspricht, so bewegt sich der Drehschalter selbsttätig in die nächste Rastposition.

DE 203 14 364 U1 zeigt einen Drehschalter in einem Kraftfahrzeug mit einem feststehenden Mittelteil und einem drehbaren Außenteil, wobei an dem drehbarem Außenteil ein Steuerteil gekoppelt ist, das die Drehbewegung des Außenteils direkt in eine Kontakteinheit überträgt.

US 5,204,502 offenbart einen Schalter, der sowohl über eine lineare Betätigungsmöglichkeit als auch eine drehende Betätigungsmöglichkeit verfügt, wobei in einem Schaltergehäuse Vorsprünge angeordnet sind, die bestimmte Rastpositionen des Schalters während seiner drehenden Bewegung definieren.

Es ist daher eine Aufgabe der vorliegenden Erfindung, eine Blende mit einem verbesserten Drehschalter aufzuzeigen, der vorzugsweise preiswert zu fertigen ist, sich einfach an spezifische Bedürfnisse anpassen lässt und eine geringere Bautiefe ermöglicht. Ferner ist es eine Aufgabe der vorliegenden Erfindung, ein entsprechendes verbessertes Haushaltsgeräts mit einem Drehschalter und/oder mit einer Blende aufzuzeigen.

Gemäß einem ersten Aspekt der Erfindung wird die Aufgabe gelöst durch eine Blende für ein Haushaltsgerät mit einem Drehschalter, der Drehschalter mit einem Drehelement, einem Rastring, mindestens einem Rastelement und einer Drehachse, um die sich das Drehelement relativ zum Rastring dreht, wobei der Rastring an seiner Innenseite mindestens eine Rastnase aufweist, die radial zum Zentrum des Rastrings hervorsteht, wobei das Rastelement am Drehelement gehalten und radial nach außen gegen die Innenseite des Rastrings vorgespannt ist, wobei das Drehelement und der Rastring entlang der Drehachse angeordnet sind, und wobei der Rastring drehfest an der Blende angeordnet ist.

Der Rastring weist mindestens einen Formabschnitt und die Blende einen GegenFormabschnitt auf, wobei der Formabschnitt und der Gegenformabschnitt formschlüssig ineinander greifen, um den Rastring relativ zur Blende zu positionieren.

Dies ermöglicht eine sichere und fertigungstechnisch günstige Anordnung des Rastrings. Insbesondere ist der Formabschnitt als Ausnehmung und der Gegenformabschnitt als Vorsprung, oder der Formabschnitt als Vorsprung und der Gegenformabschnitt als Ausnehmung ausgebildet. Mittels dieser Ausgestaltung kann zudem auf einfache Weise sichergestellt werden, dass bei einer Drehung des Drehelements der Rastring seine Position relativ zur Blende nicht verändert.

Dier Blende weist eine Vertiefung auf, in die der Rastring eingesetzt ist. Dies vereinfacht den Fertigungsprozess, da der Rastring besonders einfach einzusetzen und relativ zur Blende zu fixieren ist.

Eine Besonderheit der Erfindung liegt darin, dass die Blende des Haushaltsgeräts dafür verwendet wird, die Funktion des Drehschalters mit seinen Rastpositionen zu realisieren. Eine weitere Besonderheit der Erfindung liegt darin, dass zum Realisieren der Rastpositionen ein Rastring verwendet wird, der einstückig mit der Blende ausgebildet sein kann, aber vorteilhafterweise als von der Blende und vom Drehelement separat ausgeführtes Element ausgebildet ist.

Das Konzept, den Rastring an der Blende anzuordnen, vereinfacht den Aufbau des Drehschalters und ermöglicht es auf sehr einfache Weise, den Drehschalter hinsichtlich der Anzahl und der Winkelwerte der Rastpositionen zu konfektionieren. Dafür können alle anderen Bauteile beibehalten werden, da lediglich der Rastring angepasst wird.

Der Drehschalter ist vorteilhafterweise mit einem Winkelpositionsmesser drehfest verbunden, der mindestens zwei Winkelpositionen voneinander unterscheiden kann. Als Winkelpositionsmesser kommt beispielsweise ein Potentiometer infrage, welches mittels des variierenden Widerstandswerts verschiedene Winkelpositionen anzeigt.

Ein weiterer Vorteil ist, dass sich der Drehschalter im Zusammenspiel mit der Blende besonders günstig realisieren lässt, da sich gegenüber den bekannten Drehschaltern insbesondere das Gehäuse einsparen lässt. Vielmehr dient nur die Blende selber der Aufnahme des Drehelements und des Rastrings.

Ein weiterer Vorteil des Drehschalters bzw. der Blende ist, dass sich eine besonders geringe Bautiefe erzielen lässt. Dadurch lässt sich die Blende besonders kompakt bauen. Zudem ist es vorteilhaft, wie nachfolgend noch näher erläutert wird, dass alle Teile aus Kunststoff gefertigt werden können. Dies führt zu einer weiteren Verringerung der Kosten bei der Fertigung.

Zudem ergibt sich der Vorteil, dass sich Drehschalter und Drehknebel aus verschiedenen Materialien fertigen lassen. Durch Kombination unterschiedlicher Materialien wie Kunststoff/Metall, lässt sich die Haptik des Drehwählersystems in Verbindung mit der Blende gezielt beeinflussen.

Wenngleich sich die Erfindung mit einem Rastelement realisieren lässt, ist es vorteilhaft, wenn der Drehschalter über zwei Rastelemente verfügt, die insbesondere, bezogen auf die Drehachse, sich diametral gegenüberliegen. Grundsätzlich können auch drei oder mehr Rastelemente verwendet werden.

Ganz allgemein sei darauf hingewiesen, dass im Rahmen dieser Erfindung die Begriffe "hoben", "unten", "oberhalb", "unterhalb", "Oberseite", "Unterseite", "Oberteil", "Unterteil", etc. lediglich Orientierungshilfen darstellen. Dabei soll ein Element, das sich "oben" befindet, weiter vom Inneren des Haushaltsgeräts entfernt sein, sich also näher am Benutzer befinden, als ein Element, das sich "unten" befindet, welches sich demnach näher am Inneren des Haushaltsgeräts befindet, also weiter vom Benutzer entfernt.

Die Aufgabe wird damit vollständig gelöst.

Bei einer vorteilhaften Ausgestaltung der Erfindung weist das Drehelement ein erstes Formteil und ein zweites Formteil auf, die entlang der Drehachse angeordnet sind, wobei das Rastelement insbesondere am ersten Formteil und/oder am zweiten Formteil verlagerbar angeordnet ist.

Diese Ausgestaltung bietet einen besonders kompakten Aufbau. Das Rastelement bzw. die Rastelemente sind dabei bevorzugt radial zur Drehachse verlagerbar.

Bei einer weiteren vorteilhaften Ausgestaltung der Erfindung sind das erste und das zweite Formteil separat voneinander ausgebildet und für eine gemeinsame Drehbewegung um die Drehachse miteinander verbunden, insbesondere formschlüssig miteinander verbunden.

Diese Ausgestaltung ist insbesondere im Hinblick auf den Fertigungsprozess vorteilhaft. So wird in vorteilhafter Weise zunächst das zweite Formteil in die Blende eingesetzt, dann der Rastring und schließlich das erste Formteil. Wird das zweite Formteil an der Blende befestigt und das erste Formteil mit dem zweiten Formteil verbunden, insbesondere verrastet, so ergibt sich eine zuverlässige Fixierung von erstem Formteil, zweitem Formteil und Rastring, wobei dennoch eine drehende Verlagerung der Formteile gegenüber dem Rastring möglich bleibt. Bei einer weiteren vorteilhaften Ausgestaltung der Erfindung weist das erste Formteil und/oder das zweite Formteil einen Abschnitt auf, der einen Außendurchmesser aufweist, der größer ist als ein freier Innendurchmesser des Rastrings.

Auf diese Weise wird besonders einfach erreicht, dass das Drehelement, also das erste Formteil und das zweite Formteil, gegenüber dem Rastring bezüglich einer axialen Bewegung entlang der Drehachse beschränkt oder sogar festgelegt sind.

Bei einer weiteren vorteilhaften Ausgestaltung der Erfindung ist entlang der Drehachse zumindest ein Teil eines Lichtleiters angeordnet.

Diese Ausgestaltung ermöglicht es auf einfache Weise, Licht von einer Unterseite des Drehschalters in Richtung der Oberseite des Drehschalters zu führen. Da der Lichtleiter bzw. zumindest ein Teil des Lichtleiters, entlang der Drehachse angeordnet ist, kann die Lichtführung unabhängig von der Drehposition des Drehschalters immer in gleicher Weise realisiert werden. Diese Ausgestaltung wird insbesondere dadurch ermöglicht, dass der Drehschalter gemäß der Erfindung keine zentrale mechanische Drehachse benötigt.

Bei einer weiteren vorteilhaften Ausgestaltung der Erfindung weist der Lichtleiter einen Abschnitt auf, der dafür ausgebildet ist, entlang der Drehachse geführtes Licht radial von der Drehachse weg zu leiten.

Dadurch kann auf einfache Weise eine Beleuchtung realisiert werden, die außerhalb der Drehachse liegt. Die Ablenkung des Lichts erfolgt dabei in vorteilhafter Weise über eine Reflektion an einer oder mehreren schrägen Flächen. Dabei ist es insbesondere vorteilhaft, wenn der Lichtleiter zwei in etwa parallele Flächen aufweist, an denen das Licht zweimal um jeweils etwa 90° abgelenkt wird, um das Licht in eine zur Drehachse in etwa parallelen, aber von der Drehachse beabstandeten Richtung zu leiten.

Bei einer weiteren vorteilhaften Ausgestaltung der Erfindung weist das Rastelement einen Rastkopf und ein Federelement auf, wobei das Federelement den Rastkopf nach außen vorspannt und sich das Federelement insbesondere am ersten und/oder am zweiten Formteil abstützt.

Diese Ausgestaltung ermöglicht eine besonders einfache und kompakte Bauweise. Es bieten sich verschiedene vorteilhafte Ausführungsformen an. Darunter zum einen, dass der Rastkopf ein Kunststoffelement mit einer Rundung ist, wobei die Rundung mit dem Rastring in Kontakt tritt. Das Federelement ist dann als Schraubenfeder, insbesondere aus Metall, ausgeführt. Zum anderen ist es vorteilhaft, wenn der Rastkopf und das Federelement einstückig als Kunststoffteil ausgeführt sind, wobei das Federelement mindestens einen, bevorzugt zwei, und besonders bevorzugt mehr als zwei, Federarme aufweist. Mittels der Vorspannung können die Rastpositionen besonders gut definiert werden.

Bei einer weiteren vorteilhaften Ausgestaltung der Erfindung ist auf dem Drehelement, insbesondere auf dem ersten Formteil, ein Drehknebel angeordnet.

Grundsätzlich kann das Drehelement, insbesondere das erste Formteil, bereits einen Drehknebel aufweisen, den der Benutzer bei einer Betätigung des Drehschalters ergreift. Es ist aber besonders vorteilhaft, wenn das Drehelement, insbesondere das erste Formteil, separat vom Drehknebel ausgebildet ist. Das Drehelement kann dann aus besonders preiswertem Kunststoff und insbesondere mit einem kostengünstigen Herstellungsverfahren, insbesondere Spritzguss, hergestellt werden, wohingegen der Drehknebel, den der Benutzer anfasst und sieht, bevorzugt in besonders hochwertigem Kunststoff oder in Metall ausgeführt ist. Durch die Trennung von Drehelement und Drehknebel können daher die Fertigungskosten trotz der hochwertigen Anmutung vergleichsweise gering gehalten werden.

Bei einer weiteren vorteilhaften Ausgestaltung der Erfindung ist die Vertiefung derart ausgebildet, dass der Rastring in einer Ebene unterhalb der von der Oberfläche der Blende aufgespannten Ebene angeordnet ist.

Die vorgeschlagene Ausgestaltung ermöglicht es, dass der Drehschalter nur eine geringe Bauhöhe gegenüber der Oberfläche der Blende benötigt. Insbesondere kann erzielt werden, dass die Bauhöhe des Drehschalters oberhalb der Oberfläche der Blende in etwa der Bauhöhe des Griffteils des Drehknebels entspricht.

Bei einer weiteren vorteilhaften Ausgestaltung der Erfindung weist die Blende eine Vertiefung auf, in die das zweite Formteil eingesetzt ist, wobei das zweite Formteil insbesondere in der Vertiefung verrastet ist.

Diese Ausgestaltung vereinfacht den Fertigungsprozess der Blende, da der Drehschalter einfach durch ein einfaches Einsetzen der Bauteile in die Blende realisiert werden kann. Zudem wird die Bauhöhe des Drehschalters oberhalb der Oberfläche der Blende gering gehalten. Die Verrastung ist vorteilhaft, da nach dem Einsetzen keine weiteren Befestigungsmaßnahmen notwendig sind.

Bei einer weiteren vorteilhaften Ausgestaltung der Erfindung ist unterhalb der Blende eine Leiterplatte mit einer Lichtquelle angeordnet, wobei die Lichtquelle entlang der Drehachse des Drehschalters angeordnet ist.

Diese Ausgestaltung ermöglicht eine besonders einfache Beleuchtung des Drehschalters, insbesondere an der Oberfläche des Drehknebels. Da der erfindungsgemäße Drehschalter keine zentrale mechanische Drehachse erfordert, kann der Schalter mit seiner Drehachse oberhalb einer Lichtquelle angeordnet werden, von wo aus das Licht, zumindest für einen bestimmten Abschnitt, entlang der Drehachse des Drehschalters geleitet wird. Dadurch lässt sich auf einfache Weise eine Beleuchtung des Drehschalters unabhängig von der Winkelposition des Drehschalters ermöglichen.

Bei einer weiteren vorteilhaften Ausgestaltung der Erfindung sind der Drehknebel aus einem ersten Material und das Drehelement und der Rastring aus einem anderen, zweiten Material gefertigt, wobei das erste Material insbesondere ein hochwertiger Kunststoff oder ein Metall ist.

Diese Ausgestaltung ermöglicht eine besonders hochwertige Haptik zu relativ niedrigen Herstellungskosten.

Gemäß einem zweiten Aspekt der Erfindung wird die Aufgabe gelöst durch ein Haushaltsgerät mit einer zuvor beschriebenen Blende.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Haushaltsgerät mit einer Blende und einem Drehschalter;
- Fig. 2: einen Drehschalter in einer geschnittenen Blende;
- Fig. 3: eine Explosionsansicht des Drehschalters gemäß Fig. 2;
- Fig. 4: eine Draufsicht auf den Lichtleiter gemäß Fig. 3;
- Fig. 5: eine perspektivische Ansicht des Lichtleiters gemäß Fig. 4;
- Fig. 6: eine weitere Ansicht des ersten Formteils gemäß Fig. 3;
- Fig. 7: eine geschnittene Blende über einer Leiterplatte mit einem beabstandeten Rastring;
- Fig. 8: eine geschnittene Blende über einer Leiterplatte mit einem eingesetzten Rastring; und
- Fig. 9: eine zweite Ausführungsform des Rastelements eines Drehschalters.

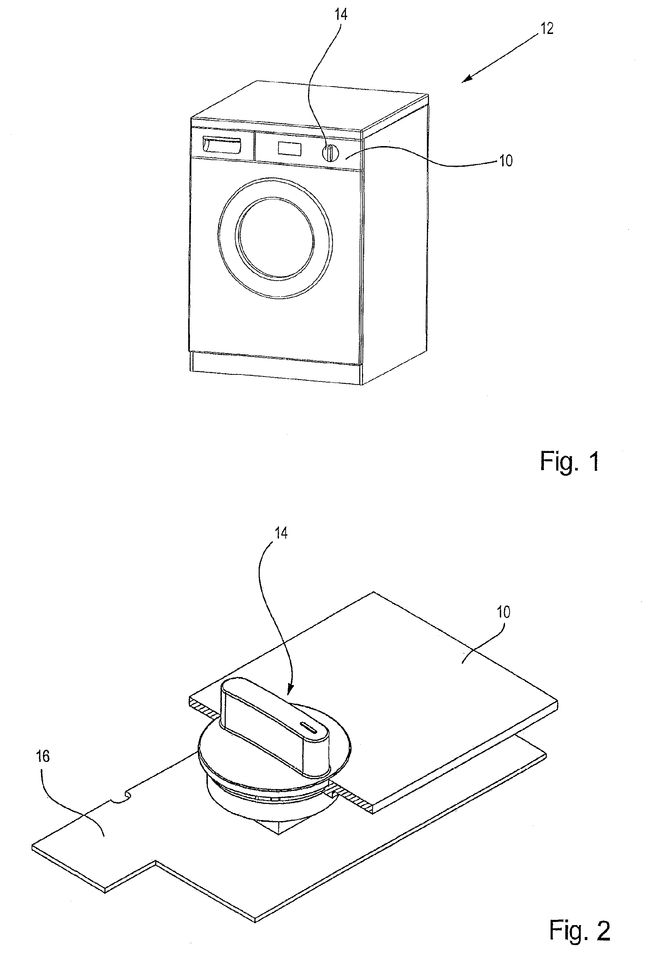

Fig. 1 zeigt eine Blende 10 an einem Haushaltsgerät 12, hier eine Waschmaschine. An der Blende 10 ist ein Drehschalter 14 angeordnet, der nachfolgend näher erläutert wird.

Fig. 2 zeigt eine Detaildarstellung der Blende 10 gemäß Fig. 1, wobei die Blende 10 hier geschnitten dargestellt ist. Um die Einbausituation zu verdeutlichen, ist unterhalb der Blende 10 eine Leiterplatte 16 angeordnet, auf der sich die Elektronik für die Funktion des Drehschalters 14 befindet. Die einzelnen Bestandteile des Drehschalters 14 werden nachfolgend näher erläutert.

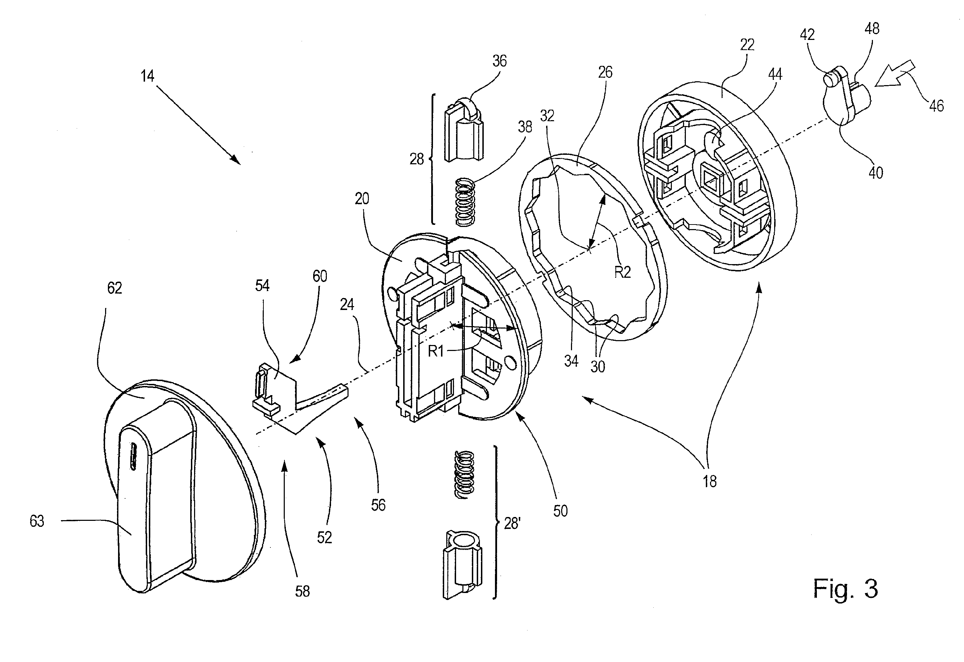

Fig. 3 zeigt eine erste Ausführungsform eines Drehschalters 14, wie er in der Blende 10 gemäß Fig. 1 eingesetzt ist. Der Drehschalter 14 weist ein Drehelement 18 auf, welches hier ein erstes Formteil 20 und ein zweites Formteil 22 aufweist. Das Drehelement 18, und damit auch das erste Formteil 20 und das zweite Formteil 22, sind entlang einer Drehachse 24 angeordnet.

Der Drehschalter 14 weist ferner einen Rastring 26 auf, der ebenfalls entlang der Drehachse 24 angeordnet ist. Der Drehschalter 14 weist weiterhin mindestens ein Rastelement 28 auf, hier zwei Rastelemente 28, 28'. Während sich das Drehelement 18 um die Drehachse 24 drehen kann, sitzt der Rastring 26 im eingebauten Zustand drehfest zur Drehachse 24, das heißt, er führt keine Drehbewegung um die Drehachse 24 aus. Dies bedeutet, dass sich das Drehelement 18 relativ zum Rastring 26 dreht.

Der Rastring 26 weist an seiner Innenseite mindestens eine Rastnase 30 auf, insbesondere eine Vielzahl von Rastnasen 30, hier zwölf Rastnasen 30. Die Rastnasen 30 stehen radial zum Zentrum 32 des Rastrings 26 hervor. Das Rastelement 28, 28' ist am Drehelement 18 gehalten und radial nach außen gegen die Innenseite 34 des Rastrings 26 vorgespannt. Dafür weist das Rastelement 28, 28' einen Rastkopf 36 und ein Federelement 38 auf, wobei das Federelement 38 den Rastkopf 36 nach außen vorspannt, und wobei sich das Federelement 38 am Drehelement 18, hier insbesondere am ersten Formteil 20, abstützt. Damit ist das Rastelement 28, 28' radial verlagerbar am Drehelement 18 angeordnet.

Es ist zu erkennen, dass das erste und das zweite Formteil 20, 22 separat voneinander ausgebildet sind und für eine gemeinsame Drehbewegung um die Drehachse 24 miteinander verbunden werden können, insbesondere formschlüssig verbunden werden können. Dies bedeutet, dass eine vom Benutzer herbeigeführte Drehung des ersten Formteils 20 zu einer entsprechenden Drehung des zweiten Formteils 22 führt.

Dem zweiten Formteil 22 ist ein Hebel 40 zugeordnet, der mit einem Nocken 42 in eine Ausnehmung 44 am zweiten Formteil 22 eingreift. Dies führt dazu, dass bei einer Drehbewegung des Drehelements 18 der Hebel 40 sich in etwa in gleicher Weise mit dem Drehelement 18 um die Drehachse 24 dreht.

Der Hebel 40 ist entlang der Drehachse 24 hohl und/oder aus einem lichtdurchlässigen Material gefertigt, so dass sich entlang der Drehachse 24 einfallendes Licht 46 durch den Hebel 40 hindurch ausbreiten kann. Der Hebel 40 hat zudem eine Aussparung 48, die mit einem Winkelpositionsmesser formschlüssig zusammenwirken kann.

Das erste Formteil 20 weist hier einen Abschnitt 50 auf, der einen Außendurchmesser R1 aufweist, der größer ist als ein freier Innendurchmesser R2 des Rastrings 26. Dadurch wird auf einfache Weise sichergestellt, dass der Rastring 26 im eingebauten Zustand vom ersten Formteil 20 an einer vorgegebenen Position gehalten wird.

Entlang der Drehachse 24 ist zumindest ein Teil 52 eines Lichtleiters 54 angeordnet. Der Lichtleiter 54 leitet Licht 46 weiter, welches an seinem Fußende 56 eingestrahlt wird. Bei der hier gezeigten Ausführungsform tritt das Licht 46 in den Lichtleiter 54 ein, nachdem es durch den Hebel 40 hindurchgeführt wurde. Wie später noch näher verdeutlicht wird, weist der Lichtleiter 54 einen Abschnitt 58 auf, der dafür ausgebildet ist, entlang der Drehachse 24 geführtes Licht 46 radial von der Drehachse 24 weg zu leiten. Bei der hier gezeigten Ausführungsform weist der Lichtleiter 54 außerdem einen zweiten Abschnitt 60 auf, der das Licht erneut umlenkt und in etwa parallel zur Drehachse 24, aber von der Drehachse 24 beabstandet, weiterführt.

Schließlich ist ein Drehknebel 62 gezeigt, der auf dem Drehelement 18, hier auf dem ersten Formteil 20, angeordnet ist.

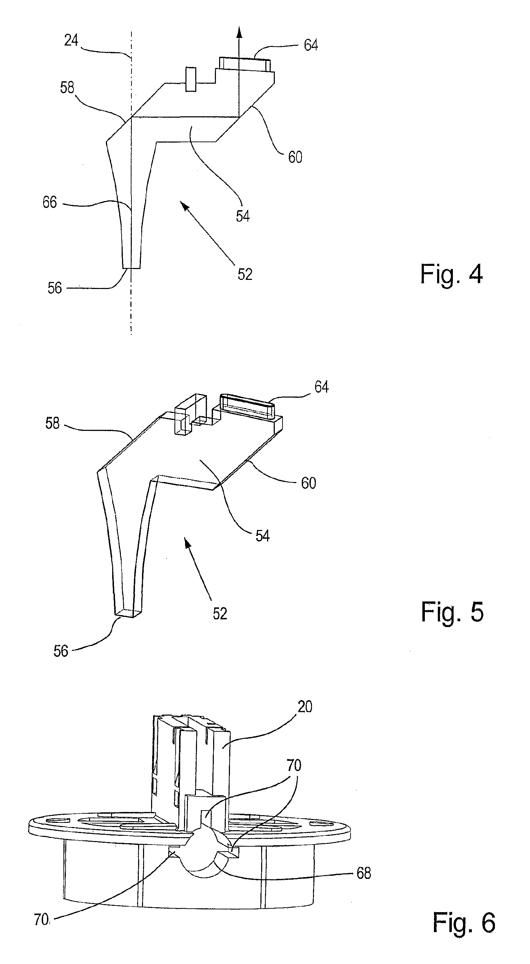

Fig. 4 zeigt eine Seitenansicht des Lichtleiters 54. Dabei ist beispielhaft der Strahlenverlauf eines Lichtstrahls 66 gezeigt, der entlang der Drehachse 24 in den Lichtleiter 54 geführt wird. Der Lichtstrahl 66 tritt am Fußende 56 des Lichtleiters 54 ein. Der Lichtstrahl 66 wird dann aufgrund einer inneren Reflektion am ersten Abschnitt 58 radial von der Drehachse 24 weg geleitet, insbesondere in etwa senkrecht zur Drehachse 24. An einem zweiten Abschnitt 60 wird der Lichtstrahl 66 dann erneut durch eine innere Reflektion umgeleitet, und zwar zumindest in etwa parallel zur Drehachse 24. Der Lichtstrahl 66 verlässt den Lichtleiter 54 dann durch das Kopfende 64 des Lichtleiters 54.

In Fig. 5 ist eine dreidimensionale Darstellung des Lichtleiters 54 gezeigt. Die Transparenz des Lichtleiters 54 ist dadurch angedeutet, dass die eigentlich verdeckten Linien dünn dargestellt sind.

Fig. 6 zeigt eine andere Ansicht des ersten Formteils 20. Dabei ist eine Ausnehmung 68 mit drei Führungsnuten 70 zu erkennen. In diese Führungsnuten 70 greift der Rastkopf 36 formschlüssig ein und wird so sicher geführt. Die Abstützung der Federelemente 38 erfolgt dabei entweder gegeneinander oder gegen das erste Formteil 20 selbst.

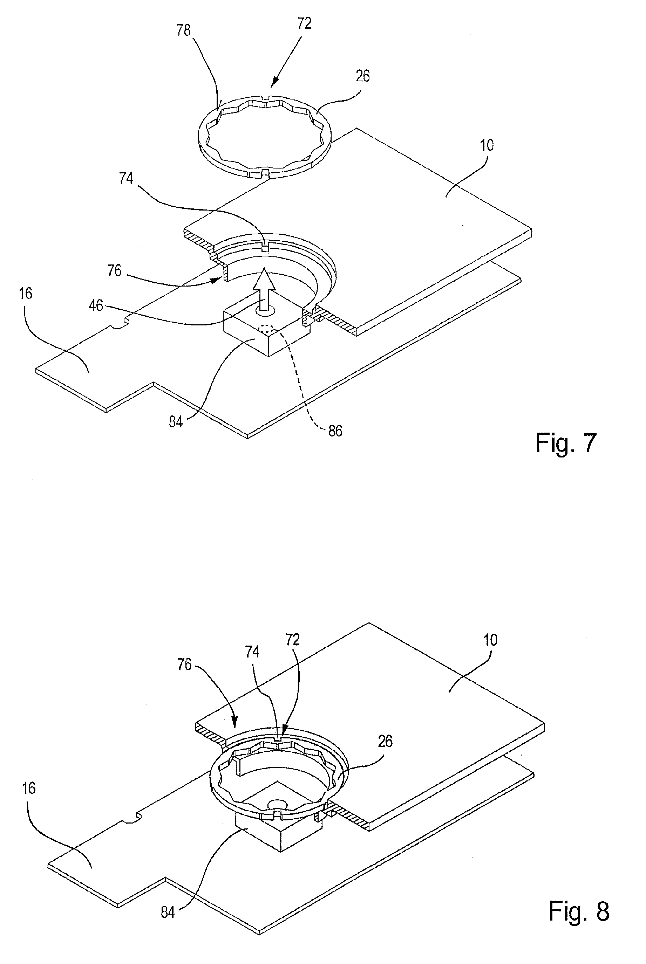

Fig. 7 zeigt eine ähnliche Ansicht wie in der Fig. 2, wobei nun aber der Drehschalter 14 nicht dargestellt ist und der Rastring 26 schwebend oberhalb der Blende 10 zur Verdeutlichung der nachfolgenden Erläuterungen dargestellt ist. Es ist zu erkennen, dass der Rastring 26 mindestens einen Formabschnitt 72 aufweist, hier eine Ausnehmung, und die Blende 10 einen Gegenformabschnitt 74 aufweist, hier einen Vorsprung. Der Formabschnitt 72 und der Gegenformabschnitt 74 greifen formschlüssig ineinander, um den Rastring 26 relativ zur Blende 10 zu positionieren. Der Rastring 26 ist dann drehfest angeordnet, so dass er sich nicht um die Drehachse 24 drehen kann.

Wenngleich der Gegenformabschnitt 74 an der Oberfläche der Blende 10 angeordnet sein kann, ist es vorteilhaft, wenn die Blende 10 eine Vertiefung 76 aufweist, in die der Rastring 26 eingesetzt ist. Dabei kann die Vertiefung 76 so ausgebildet sein, dass die Oberseite des eingesetzten Rastrings 26 mit der Oberfläche der Blende 10 abschließt. Es wird aber als besonders vorteilhaft angesehen, wenn die Vertiefung 76 derart ausgebildet ist, dass der Rastring 26, insbesondere die Oberseite 78 des Rastrings 26, in einer Ebene unterhalb der von der Oberfläche der Blende 10 aufgespannten Ebene angeordnet ist. Dadurch kann der Drehschalter 14 insgesamt so tief in die Blende 10 eingesetzt werden, dass lediglich das Griffteil 63 des Drehknebels 62 über die von der Oberfläche der Blende 10 aufgespannte Ebene hinausragt.

Ferner ist in Fig. 7 der Winkelpositionsmesser 80 auf der Leiterplatte 16 gezeigt, der die Winkelposition des Hebels 40 erfasst. Weiterhin ist mittels einer gestrichelten Linie eine Lichtquelle 86 dargestellt, die aus der Mitte des Winkelpositionsmessers 84 heraus das in Fig. 3 gezeigte Licht 46 abstrahlt. Die Vertiefung 76 weist hier, ausgehend von der Oberfläche der Blende 10, eine erste Ausnehmung mit einem großen Durchmesser, darunter eine zweite Ausnehmung 80 mit einem mittleren Durchmesser 81, und darunter eine dritte Ausnehmung 82 mit einem kleinen Durchmesser auf, wobei der große Durchmesser größer als der mittlere Durchmesser ist und der mittlere Durchmesser größer als der kleine Durchmesser ist.

Der große Durchmesser entspricht in etwa der größten radialen Erstreckung R1 des ersten Formteils 20 in seinem Abschnitt 50, der mittlere Durchmesser entspricht dem Außendurchmesser des Rastrings 26, und der kleine Durchmesser entspricht dem Außendurchmesser des zweiten Formteils 22. Dabei ist es vorteilhaft, wenn das zweite Formteil 22 in der Vertiefung 76 verrastet ist.

Fig. 8 zeigt schließlich eine Situation, die der Fig. 7 entspricht, wobei der Rastring 26 nun aber in die Vertiefung 76 eingesetzt ist und mit dem Gegenformelement 74 formschlüssig in Verbindung steht.

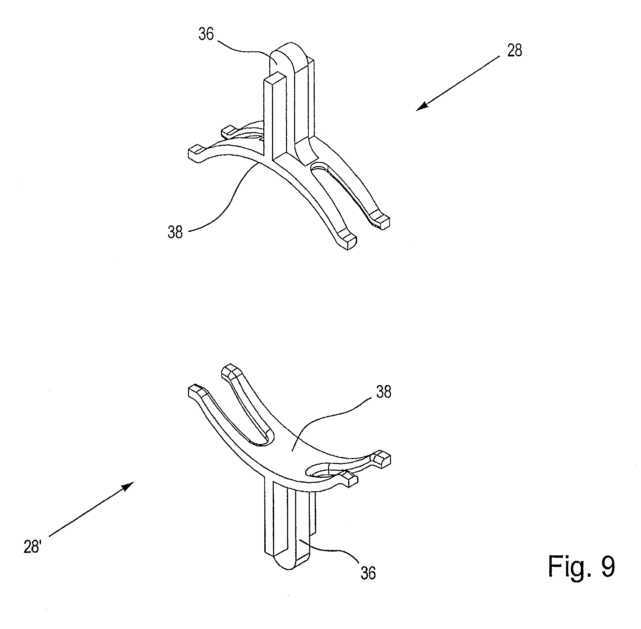

Fig. 9 zeigt eine alternative Ausgestaltung eines Rastelements 28, 28' gemäß einer zweiten Ausführungsform eines Drehschalters 14. Der Rastkopf 36 ist hier in ähnlicher Weise ausgeführt, wie es anhand der Fig. 3 erläutert wurde. Um den Rastkopf 36 radial nach außen vorzuspannen, ist das Federelement 38 hier als ein Paar von Federbögen ausgestaltet. Das Rastelement 28, 28' ist mit seinem Rastkopf 36 und dem Federelement 38 einstückig ausgebildet.

Allgemein sei darauf hingewiesen, dass alle Elemente des Drehschalters 14 und insbesondere auch die Teile der Blende 10 aus Kunststoff gefertigt sein können. Dies vereinfacht die Herstellung und reduziert die Herstellungskosten. Wird eine Ausführungsform gemäß Fig. 3 gewählt, so ist es vorteilhaft, die Federelemente 38 aus Metall zu fertigen.

Insgesamt wurde eine verbesserte Blende mit einem Drehschalter aufgezeigt, bei der sich ein Drehschalter kostengünstig realisieren und einfach an spezifische Anforderungen anpassen lässt.

## Patentansprüche

1. Blende (10) für ein Haushaltsgerät (12) mit einem Drehschalter (14), der Drehschalter (14) mit einem Drehelement (18), einem Rastring (26), mindestens einem Rastelement (28) und einer Drehachse (24), um die sich das Drehelement (18) relativ zum Rastring (26) dreht, wobei der Rastring (26) an seiner Innenseite (34) mindestens eine Rastnase (30) aufweist, die radial zum Zentrum (32) des Rastrings (26) hervorsteht, wobei das Rastelement (28) am Drehelement (18) gehalten und radial nach außen gegen die Innenseite des Rastrings (26) vorgespannt ist, wobei das Drehelement (18) und der Rastring (26) entlang der Drehachse (24) angeordnet sind, und wobei der Rastring (26) drehfest an der Blende (10) angeordnet ist, **dadurch gekennzeichnet, dass** der Rastring (26) mindestens einen Formabschnitt (72) und die Blende (10) einen Gegenformabschnitt (74) aufweist, und wobei der Formabschnitt (72) und der Gegenformabschnitt (74) formschlüssig ineinander greifen, um den Rastring (26) relativ zur Blende (10) zu positionieren und wobei die Blende (10) eine Vertiefung (76) aufweist, in die der Rastring (26) eingesetzt ist.

2. Blende nach Anspruch 1, wobei das Drehelement (18) ein erstes Formteil (20) und ein zweites Formteil (22) aufweist, die entlang der Drehachse (24) angeordnet sind, und wobei das Rastelement (28) insbesondere am ersten Formteil (20) und/oder am zweiten Formteil, (22) verlagerbar angeordnet ist.

3. Blende nach Anspruch 1 oder 2, wobei das erste und das zweite Formteil (20, 22) separat voneinander ausgebildet sind und für eine gemeinsame Drehbewegung um die Drehachse (24) miteinander verbunden sind, insbesondere formschlüssig verbunden sind.

4. Blende nach einem der vorhergehenden Ansprüche, wobei das erste Formteil (20) und/oder das zweite Formteil (22) einen Abschnitt (50) aufweisen, der einen Außendurchmesser (R1) aufweist, der größer ist als ein freier Innendurchmesser (R2) des Rastrings (26).

5. Blende nach einem der vorhergehenden Ansprüche, wobei entlang der Drehachse (24) zumindest ein Teil (52) eines Lichtleiters (54) angeordnet ist.

6. Blende nach Anspruch 5, wobei der Lichtleiter (54) einen Abschnitt (58) aufweist, der dafür ausgebildet ist, entlang der Drehachse (24) geführtes Licht (46) radial von der Drehachse (24) weg zu leiten.

7. Blende nach einem der vorhergehenden Ansprüche, wobei das Rastelement (28) einen Rastkopf (36) und ein Federelement (38) aufweist, wobei das Federelement (38) den Rastkopf (36) nach außen vorspannt und sich das Federelement (38) insbesondere am ersten und/oder am zweiten Formteil (20, 22) abstützt.

8. Blende nach einem der vorhergehenden Ansprüche, wobei auf dem Drehelement (18), insbesondere auf dem ersten Formteil (20), ein Drehknebel (62) angeordnet ist.

9. Blende nach einem der vorhergehenden Ansprüche, wobei die Vertiefung (76) derart ausgebildet ist, dass der Rastring (26) in einer Ebene unterhalb der von der Oberfläche der Blende (10) aufgespannten Ebene angeordnet ist.

10. Blende nach einem der vorhergehenden Ansprüche, wobei die Blende (10) eine Vertiefung (76) aufweist, in die das zweite Formteil (22) eingesetzt ist und das zweite Formteil (22) insbesondere in der Vertiefung (76) verrastet ist.

11. Blende nach einem der vorhergehenden Ansprüche, wobei unterhalb der Blende (10) eine Leiterplatte (16) mit einer Lichtquelle (86) angeordnet ist, wobei die Lichtquelle (86) entlang der Drehachse (24) des Drehschalters (14) angeordnet ist.

12. Blende nach einem der Ansprüche 8 bis 11, wobei der Drehknebel (62) aus einem ersten Material und das Drehelement (18) und der Rastring (26) aus einem anderen, zweiten Material gefertigt sind, wobei das erste Material insbesondere ein hochwertiger Kunststoff oder ein Metall ist.

13. Haushaltsgeräts (12) mit einer Blende (10) nach einem der vorhergehenden Ansprüche.

## Claims

1. Panel (10) for a domestic appliance (12) having a rotary switch (14), the rotary switch (14) having a rotary element (18), a latching ring (26), at least one latching element (28) and a rotation axis (24) about which the rotary element (18) rotates relative to the latching ring (26), wherein the latching ring (26) has on an inner face (34) at least one latching lug (30) projecting radially toward a center (32) of the latching ring (26), wherein the latching element (28) is held on the rotary element (18) and is prestressed radially outward against the inner face of the latching ring (26), wherein the rotary element (18) and the latching ring (26) are arranged along the rotation axis (24), and wherein the latching ring (26) is arranged in a rotationally fixed manner at the panel (10), **characterized in that** the latching ring (26) has at least one shaped portion (72) and the panel (10) has a mating shaped portion (74), and wherein the shaped portion (72) and the mating shaped portion (74) engage one another in an interlocking manner in order to position the latching ring (26) relative to the panel (10), and wherein the panel (10) comprises a recess (76) in which the latching ring (26) is arranged.

2. Panel according to claim 1, wherein the rotary element (18) comprises a first shaped part (20) and a second shaped part (22) which are arranged along the rotation axis (24), and wherein, in particular, the latching element (28) is arranged in a displaceable manner at the first shaped part (20) and/or the second shaped part (22).

3. Panel according to claim 1 or 2, wherein the first and second shaped parts (20, 22) are separate from one another and are connected two one another for joint rotary movement about the rotation axis (24).

4. Panel according to any preceding claim, wherein the first shaped part (20) and/or the second shaped part (22) have a portion (50) which has an outside diameter (R1) which is larger than a free inner diameter (R2) of the latching ring (26).

5. Panel according to any preceding claim, wherein at least one part (52) of a light guide (54) is arranged along the rotation axis (24).

6. Panel according to claim 5, wherein the light guide (54) has a portion (58) which is designed to guide light (46) which is routed along the rotation axis (24) radially away from the rotation axis (24).

7. Panel according to any preceding claim, wherein the latching element (28) has a latching head (36) and a spring element (38), wherein the spring element (38) prestresses the latching head (36) toward the outside and wherein, in particular, the spring element (38) is supported on the first and/or second shaped part (20, 22).

8. Panel according to any preceding claim, wherein on the rotary element (18), in particular on the first shaped part (20), a rotary knob (62) is arranged.

9. Panel according to any preceding claim, wherein the recess (76) is configured such that the latching ring (26) is arranged in a plane below the plane spanned by a surface of the panel (10).

10. Panel according to any preceding claim, wherein the panel (10) has a recess (76) into which the second shaped part (22) is inserted and, in particular, the second shaped part (22) is locked in the recess (76).

11. Panel according any preceding claim, wherein a printed circuit board (16) with a light source (86) is arranged beneath the panel (10), wherein the light source (86) is arranged along the rotation axis (24) of the rotary switch (14).

12. Panel according to any of claims 8 to 11, wherein the rotary knob (62) is made of a first material and the rotary element (18) and the latching ring (26) are made of a different, second material, wherein the first material is in particular a high-grade plastic or a metal.

13. Domestic appliance (12) comprising a panel (10) according to any preceding claim.

## Revendications

1. Panneau (10) pour un appareil ménager (12) comprenant un commutateur rotatif (14), le commutateur rotatif (14) comprenant un élément rotatif (18), une bague d'encliquetage (26), au moins un élément d'encliquetage (28) et un axe de rotation (24) autour duquel l'élément rotatif (18) tourne par rapport à la bague d'encliquetage (26), la bague d'encliquetage (26) présentant au niveau de son côté intérieur (34) au moins un nez d'encliquetage (30) qui fait saillie radialement vers le centre (32) de la bague d'encliquetage (26), l'élément d'encliquetage (28) étant retenu au niveau de l'élément rotatif (18) et étant précontraint radialement vers l'extérieur contre le côté intérieur de la bague d'encliquetage (26), l'élément rotatif (18) et la bague d'encliquetage (26) étant disposés le long de l'axe de rotation (24) et la bague d'encliquetage (26) étant disposée de manière solidaire en rotation sur le panneau (10), **caractérisé en ce que** la bague d'encliquetage (26) présente au moins une portion façonnée (72) et le panneau (10) présente une portion façonnée conjuguée (74) et la portion façonnée (72) et la portion façonnée conjuguée (74) s'engagent l'une dans l'autre par engagement positif afin de positionner la bague d'encliquetage (26) par rapport au panneau (10) et le panneau (10) présentant un renfoncement (76) dans lequel est insérée la bague d'encliquetage (26).

2. Panneau selon la revendication 1, dans lequel l'élément rotatif (18) présente une première partie façonnée (20) et une deuxième partie façonnée (22) qui sont disposées le long de l'axe de rotation (24), et l'élément d'encliquetage (28) étant disposé de manière déplaçable notamment sur la première partie façonnée (20) et/ou sur la deuxième partie façonnée (22).

3. Panneau selon la revendication 1 ou 2, dans lequel la première et la deuxième partie façonnée (20, 22) sont réalisées séparément l'une de l'autre et sont connectées l'une à l'autre pour un mouvement de rotation commun autour de l'axe de rotation (24), en particulier sont connectées par engagement positif.

4. Panneau selon l'une quelconque des revendications précédentes, dans lequel la première partie façonnée (20) et/ou la deuxième partie façonnée (22) présentent une portion (50) qui présente un diamètre extérieur (R1) qui est supérieur à un diamètre intérieur libre (R2) de la bague d'encliquetage (26).

5. Panneau selon l'une quelconque des revendications précédentes, dans lequel, le long de l'axe de rotation (24), est disposée au moins une partie (52) d'un guide de lumière (54).

6. Panneau selon la revendication 5, dans lequel le guide de lumière (54) présente une portion (58) qui est réalisée de manière à conduire la lumière (46) guidée le long de l'axe de rotation (24) radialement à l'écart de l'axe de rotation (24).

7. Panneau selon l'une quelconque des revendications précédentes, dans lequel l'élément d'encliquetage (28) présente une tête d'encliquetage (36) et un élément de ressort (38), l'élément de ressort (38) précontraignant la tête d'encliquetage (36) vers l'extérieur et l'élément de ressort (38) s'appuyant notamment sur la première et/ou sur la deuxième partie façonnée (20, 22).

8. Panneau selon l'une quelconque des revendications précédentes, dans lequel, sur l'élément rotatif (18), en particulier sur la première partie façonnée (20), est disposé un bouton tournant (62).

9. Panneau selon l'une quelconque des revendications précédentes, dans lequel le renfoncement (76) est réalisé de telle sorte que la bague d'encliquetage (26) soit disposée dans un plan en-dessous du plan tendu par la surface du panneau (10).

10. Panneau selon l'une quelconque des revendications précédentes, dans lequel le panneau (10) présente un renfoncement (76) dans lequel est insérée la deuxième partie façonnée (22) et la deuxième partie façonnée (22) est encliquetée notamment dans le renfoncement (76).

11. Panneau selon l'une quelconque des revendications précédentes, dans lequel, en-dessous du panneau (10), est disposée une carte à circuit intégré (16) avec une source de lumière (86), la source de lumière (86) étant disposée le long de l'axe de rotation (24) du commutateur rotatif (14).

12. Panneau selon l'une quelconque des revendications 8 à 11, dans lequel le bouton rotatif (62) est fabriqué à partir d'un premier matériau et l'élément rotatif (18) et la bague d'encliquetage (26) sont fabriqués à partir d'un autre, deuxième, matériau, le premier matériau étant notamment un plastique de haute qualité ou un métal.

13. Appareil ménager (12) comprenant un panneau (10) selon l'une quelconque des revendications précédentes.
